# EUROPÄISCHE PATENTSCHRIFT

(11) **EP 1 214 222 B1**
(45) Veröffentlichungstag und Bekanntmachung des Hinweises auf die Patenterteilung: **05.11.2003**
(21) Anmeldenummer: 00960573.4
(22) Anmeldetag: 31.08.2000
(51) Int. Cl.: B60Q 1/48

(54) **ANZEIGEEINRICHTUNG FÜR EINE ELEKTRONISCHE RÜCKFAHRHILFE**
DISPLAY ELEMENT FOR AN ELECTRONIC BACK-UP ASSIST SYSTEM
DISPOSITIF D'AFFICHAGE POUR SYSTEME ELECTRONIQUE D'AIDE A LA MARCHE ARRIERE

(30) Priorität: 07.09.1999 DE 19942636
(43) Veröffentlichungstag der Anmeldung: 19.06.2002
(73) Patentinhaber: Volkswagen Aktiengesellschaft, 38436 Wolfsburg (DE)
(72) Erfinder: AUFDERMAUER, Detlef, 38179 Schwülper (DE)
(86) Internationale Anmeldenummer: EP0008523
(87) Internationale Veröffentlichungsnummer: WO01017821

(56) Entgegenhaltungen:
- DE-A- 3 112 726
- DE-A- 3 141 230
- FR-A- 2 716 145

## Beschreibung

Die Erfindung betrifft ein Park-Distanz System mit einer Anzeigeeinrichtung für eine elektronische Rückfahrhilfe in einem Kraftfahrzeug gemäß dem Oberbegriff des Anspruchs 1. Ein derartiges System ist bekannt durch die DE 31 41 230 A1.

Derartige elektronische Rückfahrhilfen oder sogenannte Einparkhilfen werden zur Unterstützung des Fahrzeugführers angewendet, um den Fahrer vor eventuell vorhandenen Hindernissen zu warnen. Dabei wird zum Beispiel der jeweilige Abstand des Kraftfahrzeugs zu einem Hindernis in Zentimetern auf einer Anzeigefläche angezeigt. Durch die Anordnung dieser Anzeigehilfe im hinteren Bereich des Innenraums des Kraftfahrzeugs ergibt sich der Vorteil, dass der Fahrer in der für das Rücksetzen eingenommenen Fahrposition, also mit Blick nach hinten, gleichzeitig Gegenstände hinter dem Fahrzeug direkt erkennen und die Anzeigeeinrichtung der elektronischen Rückfahrhilfe einsehen kann. Grundsätzlich ist beides auch über den Innenspiegel des Kraftfahrzeugs möglich. Für eine optimale Einsicht der Anzeigeeinrichtung der Rückfahrhilfe über den Innenspiegel müßte jedoch der Fahrer in der Regel den Innenspiegel manuell verstellen.

Der Erfindung liegt die Aufgabe zugrunde, eine derartige Verstellbarkeit des Innenspiegels zu erleichtern. Diese Aufgabe wird durch die im Anspruch 1 angegebene Erfindung gelöst. Vorteilhafte Ausführungsformen der Erfindung sind in den Unteransprüchen angegeben.

Bei der Erfindung steht somit die Anzeigeeinrichtung für die Rückfahrhilfe mit dem Innenspiegel derart im Wirkzusammenhang, dass der Innenspiegel bei aktivierter Anzeigeeinrichtung elektrisch verstellbar bzw. steuerbar zur Anzeigefläche der Anzeigeeinrichtung positionierbar ist.

Dadurch ergibt sich der Vorteil, dass der Fahrer beim Rückwärtsfahren den Innenspiegel nicht manuell verstellen muß, um den Innenspiegel optimal auf die Anzeigefläche der Rückfahrhilfe ausrichten und die Anzeigefläche optimal einsehen zu können.

Vorzugsweise ist die Anzeigeeinrichtung verstellbar und/oder mittels einer transparenten Abdeckung zum Fahrgastraum abgeschirmt. Dabei kann die Abdeckung der Anzeigeeinrichtung aus einem durchsichtigen, transparenten Material, einem Kunststoff oder aus Rauchglas hergestellt sein. Beispielsweise ist die Abdeckung in einer gewölbten Form der Form des Dachhimmels in diesem Bereich angepaßt. Vorzugsweise ist die Abdeckung nur im Bereich der wirksamen Anzeigefläche der Anzeigeeinrichtung mit einer durchsichtigen, transparenten Abdeckung versehen, und die gesamte Abdeckung ist herausnehmbar im Dachmodul angeordnet. Beispielsweise entfaltet die durchscheinende Abdeckung ihre Transparenz bei Aktivierung der Anzeigeeinrichtung, und die Aktivierung der Anzeigeeinrichtung erfolgt fahrrichtungsabhängig bzw. abhängig vom eingelegten Gang. Durch diese Ausführungsformen können eine gute Ablesbarkeit der Anzeigeeinrichtung, eine harmonische Anpassung an den Konturverlauf des Fahrzeughimmels und ein gefälliges optisches Aussehen der Anzeigeeinrichtung erreicht und die Gefahr einer Verletzung durch scharfe Kanten oder Vorsprünge verringert werden

Beispielsweise sind die Informationen auf der Anzeigefläche der Anzeigeeinrichtung über eine einzelne elektronische Segmente zu einer LED-Kette angeordnet sichtbar und ablesbar und somit auch bei Dunkelheit erkennbar. Dabei kann die Anzeigeeinrichtung in verschiedenen Positionen, einer mittleren oder einer hinteren Position, im Dachmodul angeordnet sein.

Vorzugsweise werden die Distanzen eines Kraftfahrzeugs zu einem Hindernis über Abstandssensoren erfaßt, in einer Steuerung ausgewertet und nach einem bestimmten Modus die jeweilige Position des Kraftfahrzeugs farblich auf der Anzeigefläche der Anzeigeeinrichtung wiedergegeben und ablesbar gemacht. Die Abdeckung und deren Teilbereich können neben einem durchsichtigen, transparenten Kunststoff und Rauchglas auch aus anderen durchsichtigen, transparenten Materialien hergestellt sein.

Mit nachfolgendem Ausführungsbeispiel soll die Erfindung näher erläutert werden.

In der dazugehörigen Zeichnung zeigt
- Figur 1:: in schematischer Darstellung die Anordnung der Anzeigeeinrichtung im Dachmodul eines Fahrzeuges,
- Figur 2:: eine Teilansicht nach Figur 1, die Anordnung und Ausbildung der Anzeigeeinrichtung,
- Figur 3:: eine schematische Darstellung der Ausbildung Anzeigeeinrichtung mit Anzeigefläche.

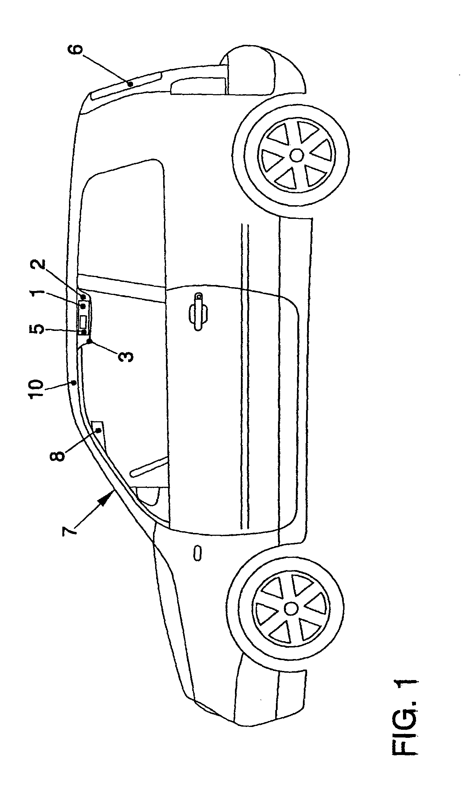

Der Einbau der Anzeigeeinrichtung 1 in das Dachmodul 2 eines Kraftfahrzeuges ist in schematischer Darstellung in der Figur 1 gezeigt und es ist dargestellt, wie die Anzeigeeinrichtung 1 mit ihrer Anzeigefläche 5 in Richtung der Frontscheibe 7 und somit auf den Innenspiegel 8 gerichtet, im Dachmodul 2 angeordnet ist.
Zum Fahrgastinnenraum ist die Anzeigeeinrichtung 1 mittels einer Abdeckung 3 abgedeckt bzw. abgeschirmt, wobei die Abdeckung 3 aus einem durchsichtigen, transparentem Material hergestellt ist. Bevorzugterweise kann hier ein Kunststoff oder Rauchglas zur Anwendung kommen, welche die Eigenschaften besitzen, daß diese durchscheinend sind, so daß die auf der Anzeigefläche 5 der Anzeigeeinrichtung 1 zur Anzeige gebrachten Informationen auch vom Fahrzeugführer über den Innenspiegel 8 eindeutig erkannt werden können.

Die Abdeckung 3 ist in ihrer Gesamtheit in einer gekrümmten Form ausgebildet, die so gewählt ist, daß die Abdeckung 3 sich harmonisch in den Verlauf des Dachhimmels 10 einfügt, wodurch der Bereich der Heckscheibe 6 nicht durch zusätzliche Vorsprünge oder Einbauten eingeschränkt oder verdeckt wird.
Somit steht dem Fahrzeugführer der gesamte Bereich der Heckscheibe 6 zur Einsicht/Durchsicht zur Verfügung, da er beim normalen Fahrbetrieb sich des öfteren durch den Blick in den Innenspiegel 8 über das Verkehrsgeschehen informiert, um beispielsweise bei Überholvorgängen herannahende Fahrzeuge bereits aus der Ferne sehen und erkennen zu können.
Die Abdeckung 3 ist in vorteilhafter Ausführung als ein selbstständiges Bauelement ausgeführt und über entsprechende Halterungen herausnehmbar im Dachmodul 2 angeordnet.

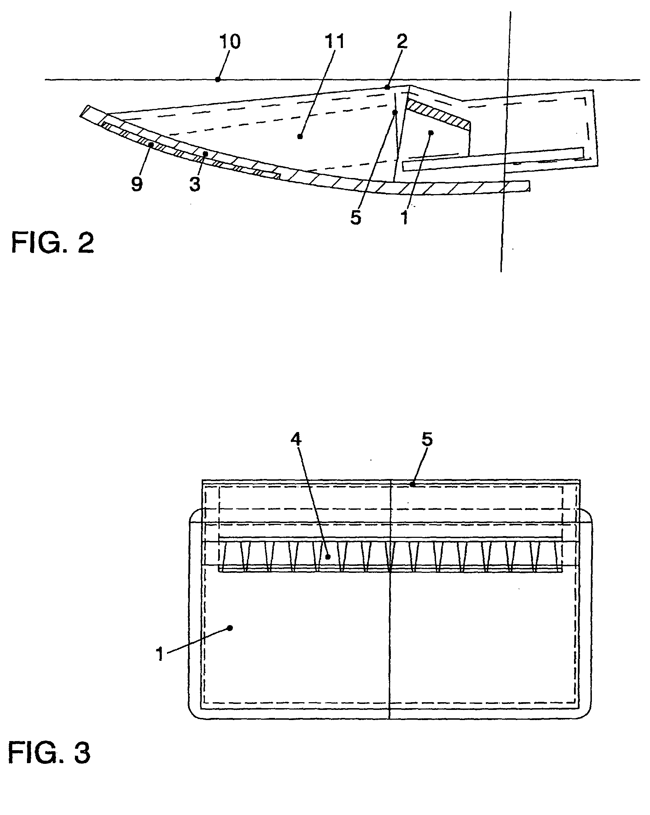

Die Zeichnung gemäß Figur 2 gibt eine Teilansicht zur Figur 1 wieder und es ist dargestellt, wie die Anzeigeeinrichtung 1 ausgebildet und im Dachmodul 2 angeordnet ist.
Aus dieser Darstellung wird sehr deutlich, wie die Abdeckung in ihrer konstruktiven Ausbildung dem Verlauf des Dachhimmels 10 angepaßt ist und ferner ist mit der Bezugszahl 9 ein Teilbereich der Abdeckung 3 bezeichnet, im weitesten Sinne eine durchsichtige Fläche, die unmittelbar so in der Abdeckung 3 eingeordnet ist, daß über diesen Teilbereich 9 gleichfalls die Anzeigefläche 5 der Anzeigeeinrichtung erkennbar ist. Dieser Sichtbereich oder auch Lichtkanal ist zum Verständnis mit der Bezugszahl 11 bezeichnet.
Diese Ausbildung der Abdeckung 3 hat den Vorteil, daß die Abdeckung 3 nur im Teilbereich 9 aus einem durchsichtigen, transparentem Material hergestellt sein muß, für den übrigen Bereich der Abdeckung 3 kann ein kostengünstigeres Kunststoffmaterial oder auch eine andere Materialart verwendet werden.
In vorteilhafter Ausführung kann die Anzeigefläche 5 der Anzeigeeinrichtung 1 in ihrer Lage verstellt bzw. verschwenkt werden, so daß diese Anzeigefläche 5 direkt auf den Innenspiegel 8 sich ausrichtet bzw. ausgerichtet wird, um die Informationen auf der Anzeigefläche 5 in ihrer Gesamtheit im Innenspiegel 8 erkennen zu können.
Ferner ist es durchaus denkbar, die Anzeigeeinrichtung 1 selbst innerhalb des Dachmoduls 2 verstellbar anzuordnen.

Die Ausbildung der Anzeigeeinheit 1 mit ihrer Anzeigefläche 5 und den Anzeigeelementen zeigt in einer Draufsicht prinziphaft die Figur 3.

Die einzelnen Anzeigeelemente sind dabei als elektrische/elektronische Anzeigeelemente ausgebildet und bestehen gemäß des Ausführungsbeispieles aus LED-Segmenten 4, die zu einer LED-Kette gefügt sind, auf der über die einzelnen LED-Segmente 4 in farblicher Wiedergabe die jeweilige Position des Kraftfahrzeuges zu einem Hindernis optisch signalisiert bzw. angezeigt wird. Mit dieser Anzeigeeinrichtung 1 sind entsprechende Sensoren verknüpft, die im weitesten Sinne als Abstandssensoren fungieren und den entsprechenden Abstand erfassen. Dieses Maß wird einer Elektronik zur Auswertung zugeführt, welches dann als optische Information auf der LED-Kette sichtbar wird. Diese Elemente stellen in ihrer Gesamtheit und in ihrem Funktionszusammenhang das Park-Distanz-System gemäß der vorgestellten Lösung dar.

Durch die farbliche Anzeige, in vorteilhafter Weise die Anwendung der im Straßenverkehr üblichen Farbgebungen wie rot, gelb und grün, wird dem Fahrzeugführer die jeweilige Position des Kraftfahrzeuges signalisiert und somit die Möglichkeit gegeben, auf die angezeigte Situation reagieren zu können.

Die Überwachungsbereiche, nämlich vorn links bzw. vorn rechts vom PKW und der Heckbereich des PKWs werden durch die elektrisch/elektronischen LED-Segmente 4 nach einer ganz bestimmten und festlegbaren farblichen Wiedergabe erfaßt und angezeigt. So wird der Bereich PKW vorn links beispielsweise auf der Anzeigefläche 5 durch die LED-Segmente 4 von außen nach innen gesehen, farblich in rot-rot-gelb-gelbgelb-gelb-grün wiedergegeben, während der Bereich vorn rechts, auf der LED-Kette von innen nach außen, in der Farbkombination grün-gelb-gelb-gelb-gelb-rot-rot wiedergegeben wird.
Bei der Hecküberwachung ergibt sich eine Doppel-Anzeige Heck in der farblichen Wiedergabe rot-rot-gelb-gelb-gelb-gelb-grün-( )-grün-gelb-gelb-gelb-gelb-rot-rot.

Die nachfolgende Tabelle gibt einen Überblick über die Betriebsbereitschaft der Anzeigeeinrichtung 1.

| **Anzeige** | **Grün** | **Gelb** | **Gelb** | **Gelb** | **Gelb** | **Rot** | **Rot** | |
|---|---|---|---|---|---|---|---|---|
| Betriebsbereitschaft | 1 | 0 | 0 | 0 | 0 | 0 | 0 | |
| 1. Stufe | | 1 | 1 | 0 | 0 | 0 | 0 | 0 |
| 2. Stufe | | 0 | 1 | 1 | 0 | 0 | 0 | 0 |
| 3. Stufe | | 0 | 1 | 1 | 1 | 0 | 0 | 0 |
| 4. Stufe | | 0 | 1 | 1 | 1 | 1 | 0 | 0 |
| 5. Stufe | | 0 | 1 | 1 | 1 | 1 | 1 | 0 |
| 6. Stufe | | 0 | 1 | 1 | 1 | 1 | 1 | 1 |

Mit Betriebsbereitschaft ist dabei die Anfangs- oder Ausgangsposition des Kraftfahrzeuges angezeigt und auf der Anzeigefläche 5 der Anzeigeeinrichtung 1 wird dies mit der Grün-Anzeige auf einem LED-Segement 4 sichtbar. In den folgenden Stufen 1 bis 4 werden die weiteren Betriebsarten des Kraftfahrzeuges, beispielsweise beim Einparken verdeutlicht. Je nach Abstandsentfernung zu einem Hindernis wird dieses Maß über die Abstandssensoren erfaßt und nach ihrem Abgleich auf der Anzeigefläche 5 sichtbar.
Die 6. Stufe der Tabelle gibt dem Fahrer die Situation bekannt, daß er unbedingt reagieren muß, um beispielsweise einem Anstoß des Fahrzeuges an ein Hindernis zu verhindern.

Durch die farbliche Wiedergabe auf der Anzeigefläche 5 der Anzeigeeinrichtung 1 stehen dem Fahrzeugführer sämtliche Informationen beim Rückwärtsfahren bzw. beim Einparken zur Verfügung, die auf ein Hindernis hinweisen bzw. ihm die Information geben, daß ein Rückwärtsfahren oder Einparken in der angezeigten Stufe ohne Schwierigkeiten möglich ist.
Die einzelnen LED-Segmente 4 sind beleuchtet, so daß die Anzeigeeinrichtung auch bei Dunkelheit anwendbar ist, somit die Betriebspositionen sichtbar bzw. ablesbar auf der Anzeigefläche 5 der Anzeigeeinrichtung 1 anliegen.
Um die gesamte Anzeigefläche 5 und somit der darin angegebenen Informationen für den Fahrzeugführer in voller Breite sichtbar zu machen, besteht zwischen der Position der Anzeigeeinrichtung 1 mit ihrer Anzeigefläche 5 und der Position des Innenspiegels 8 ein derartiger Wirkzusammenhang, daß der Innenspiegel 8 elektrisch verstellbar bzw. steuerbar zur Anzeigefläche 5 der Anzeigeeinrichtung positioniert wird. Der Innenspiegel 8 wird im weitesten Sinne zur Anzeigefläche 5 nachgeführt.

## Patentansprüche

1. Park-Distanz System mit einer Anzeigeeinrichtung (1) für eine elektronische Rückfahrhilfe, welche im hinteren oder im mittleren Bereich des Innenraums des Kraftfahrzeugs in einem Dachmodul (2) derart angeordnet ist, daß deren Anzeigefläche (5) in Richtung zum Fahrzeugführer weist, über den Innenspiegel (8) im Frontbereich des Kraftfahrzeugs einsehbar ist und bei eingelegtem Rückwärtsgang aktiviert wird, **dadurch gekennzeichnet, dass** die Anzeigeeinrichtung (1) mit dem Innenspiegel (8) derart im Wirkzusammenhang steht, dass der Innenspiegel (8) bei aktivierter Anzeigeeinrichtung (1) elektrisch verstell- bzw. steuerbar zur Anzeigefläche (5) der Anzeigeeinrichtung (1) positioniert wird.

2. System mit Anzeigeeinrichtung nach Anspruch 1, **dadurch gekennzeichnet, dass** die Anzeigeeinrichtung (1) verstellbar ist.

3. System mit Anzeigeeinrichtung nach Anspruch 1 oder 2, **dadurch gekennzeichnet, dass** die Anzeigeeinrichtung (1) mittels einer transparenten Abdeckung (3) zum Fahrgastraum abgeschirmt ist.

4. System mit Anzeigeeinrichtung nach Anspruch 3, **dadurch gekennzeichnet, dass** die Abdeckung (3) der Anzeigeeinrichtung (1) aus einem durchsichtigen, transparenten Material, einem Kunststoff oder Rauchglas hergestellt ist.

5. System mit Anzeigeeinrichtung nach einem der Ansprüche 3 oder 4, **dadurch gekennzeichnet, dass** die Abdeckung (3) in einer gewölbten Form, der Form des Dachhimmels (10) in diesem Bereich angepaßt, ausgeführt ist.

6. System mit Anzeigeeinrichtung nach einem der Ansprüche 3 bis 5, **dadurch gekennzeichnet, dass** die Abdeckung (3), vorzugsweise nur im Bereich der wirksamen Anzeigefläche (5) der Anzeigeeinrichtung (1), mit einer durchsichtigen, transparenten Abdeckung versehen und die gesamte Abdeckung (3) herausnehmbar im Dachmodul (2) angeordnet ist.

7. System mit Anzeigeeinrichtung nach einem der Ansprüche 4 bis 6, **dadurch gekennzeichnet, dass** die durchscheinende Abdeckung (3) ihre Transparenz bei Aktivierung der Annzeigeeinrichtung (1) entfaltet und die Aktivierung der Anzeigeeinrichtung (1) fahrrichtungsabhängig bzw. abhängig vom eingelegten Gang erfolgt.

8. System mit Anzeigeeinrichtung nach einem der Ansprüche 1 bis 7, **dadurch gekennzeichnet, dass** die Informationen auf der Anzeigefläche (5) der Anzeigeeinrichtung (1) über einzelne elektrische/elektronische Segmente (4), zu einer LED-Kette angeordnet, sichtbar und ablesbar anliegen, somit auch bei Dunkelheit erkennbar sind.

9. System mit Anzeigeeinrichtung nach einem der Ansprüche 1 bis 8, **dadurch gekennzeichnet, dass** die Anzeigeeinrichtung (1) in verschiedenen Positionen, einer mittleren oder einer hinteren Position, im Dachmodul (2) angeordnet ist.

10. System mit Anzeigeeinrichtung nach einem der Ansprüche 1 bis 9, **dadurch gekennzeichnet, dass** die Distanzen des Kraftfahrzeugs zu einem Hindernis über Abstandssensoren erfaßt, in einer Steuerung ausgewertet werden und nach einem bestimmten Modus die jeweilige Position des Kraftfahrzeugs farblich auf der Anzeigefläche (5) der Anzeigeeinrichtung (1) wiedergegeben wird und ablesbar ist.

## Claims

1. Parking distance sensing system with a display device (1) for an electronic reversing aid which is arranged in the rear or the central region of the interior of the motor vehicle in a roof module (2) in such a way that its display surface (5) points in the direction of the driver of the vehicle, can be viewed in the front area of the motor vehicle via the interior rear view mirror (8) and is activated when the reverse gear is engaged, **characterized in that** the display device (1) is operationally connected to the interior rear view mirror (8) in such a way that, when the display device (1) is activated, the interior rear view mirror (8) is positioned in an electrically adjustable and controllable fashion with respect to the display surface (5) of the display device (1).

2. System with display device according to Claim 1, **characterized in that** the display device (1) is adjustable.

3. System with display device according to Claim 1 or 2, **characterized in that** the display device (1) is screened with respect to the passenger compartment by means of a transparent cover (3).

4. System with display device according to Claim 3, **characterized in that** the cover (3) of the display device (1) is manufactured from a transparent material, a plastic or smoked glass.

5. System with display device according to one of Claims 3 or 4, **characterized in that** the cover (3) is embodied in a curved shape, adapted to the shape of the internal roof lining (10) in this area.

6. System with display device according to one of Claims 3 to 5, **characterized in that** the cover (3) is provided, preferably only in the region of the effective display surface (5) of the display device (1), with a transparent cover, and the entire cover (3) is arranged in the roof module (2) in a removable fashion.

7. System with display device according to one of Claims 4 to 6, **characterized in that** the translucent cover (3) develops its transparency when the display device (1) is activated, and the display device (1) is activated as a function of the direction of travel or as a function of the engaged gear speed.

8. System with display device according to one of Claims 1 to 7, **characterized in that** the information on the display surface (5) of the display device (1) is arranged over individual electrical/electronic segments (4) to form a LED chain, is present in a visible way which can be read out and can thus be recognized in the dark.

9. System with display device according to one of Claims 1 to 8, **characterized in that** the display device (1) is arranged in various positions, a central position or a rear position, in the roof module (2).

10. System with display device according to one of Claims 1 to 9, **characterized in that** the distances between the motor vehicle and an obstacle are sensed by means of distance sensors and evaluated in a controller and, in accordance with a specific mode, the respective position of the motor vehicle is represented in colour on the display surface (5) of the display device (1) and can be read off.

## Revendications

1. Système permettant de se garer à distance comportant un dispositif d'affichage (1) pour système électronique d'aide à la marche arrière, qui est disposé dans la zone arrière ou centrale de l'habitacle du véhicule automobile dans un module de toit (2) de manière à ce que sa surface d'affichage (5) soit tournée vers le conducteur du véhicule, soit consultable par le biais du rétroviseur intérieur (8) de la zone frontale du véhicule automobile et soit activée lorsque la marche arrière est enclenchée, **caractérisé en ce que** le dispositif d'affichage (1) est en liaison fonctionnelle avec le rétroviseur intérieur (8) de manière à ce que le rétroviseur intérieur (8), lorsque le dispositif d'affichage (1) est activé, soit positionné de façon à pouvoir être réglé ou commandé électriquement par rapport à la surface d'affichage (5) du dispositif d'affichage (1).

2. Système à dispositif d'affichage selon la revendication 1, **caractérisé en ce que** le dispositif d'affichage (1) est réglable.

3. Système à dispositif d'affichage selon la revendication 1 ou 2, **caractérisé en ce que** le dispositif d'affichage (1) est isolé de l'habitacle au moyen d'un capot transparent (3).

4. Système à dispositif d'affichage selon la revendication 3, **caractérisé en ce que** le capot (3) du dispositif d'affichage (1) est fabriqué dans un matériau translucide et transparent, une matière plastique ou du verre fumé.

5. Système à dispositif d'affichage selon l'une quelconque des revendications 3 ou 4, **caractérisé en ce que** le capot (3) est réalisé avec une forme bombée adaptée à la forme du ciel du toit (10) dans cette zone.

6. Système à dispositif d'affichage selon l'une quelconque des revendications 3 à 5, **caractérisé en ce que** le capot (3) est pourvu, de préférence seulement au niveau de la surface d'affichage active (5) du dispositif d'affichage (1), d'un capot translucide et transparent et que l'ensemble du capot (3) est disposé de manière amovible dans le module de toit (2).

7. Système à dispositif d'affichage selon l'une quelconque des revendications 4 à 6, **caractérisé en ce que** le capot translucide (3) laisse apparaître sa transparence lors de l'activation du dispositif d'affichage (1) et que l'activation du dispositif d'affichage (1) se fait en fonction du sens de circulation ou en fonction de la vitesse enclenchée.

8. Système à dispositif d'affichage selon l'une quelconque des revendications 1 à 7, **caractérisé en ce que** les informations sur la surface d'affichage (5) du dispositif d'affichage (1) sont disposées sur différents segments électriques/électroniques (4) formant une chaîne de DEL d'une manière visible et lisible et sont donc reconnaissables même dans l'obscurité.

9. Système à dispositif d'affichage selon l'une quelconque des revendications 1 à 8, **caractérisé en ce que** le dispositif d'affichage (1) est disposé dans différentes positions, une position centrale ou une position postérieure, dans le module de toit (2).

10. Système à dispositif d'affichage selon l'une quelconque des revendications 1 à 9, **caractérisé en ce que** les distances du véhicule automobile par rapport à un obstacle sont détectées par des capteurs de distance, exploitées dans une commande et que la position respective du véhicule automobile est représentée et consultable en couleurs suivant un certain mode sur la surface d'affichage (5) du dispositif d'affichage (1).
